# EUROPÄISCHE PATENTANMELDUNG

(11) **EP 1 120 185 A1**
(43) Veröffentlichungstag der Anmeldung: **01.08.2001**
(21) Anmeldenummer: 00890030.0
(22) Anmeldetag: 28.01.2000
(51) Int. Cl.: B23K 10/00, B23K 10/02, B23K 9/127, B25J 19/00

(54) **Plasmabrenner mit Lasersensor**

(71) Anmelder: Messer igm Robotersysteme AG, 2355 Wiener Neudorf (AT); Volkswagen Aktiengesellschaft, 38436 Wolfsburg (DE)
(72) Erfinder: Stremitzer, Andreas, 1238 Wien (AT); Radscheit, Carolin, Dr.-Ing., 38112 Braunschweig (DE)
(74) Vertreter: Beer, Manfred, Dipl.-Ing.

(57) **Zusammenfassung**

Zum Erfassen der Ist-Lage einer Naht beim Plasmalöten oder Plasmaschweißen ist neben einem an einem Roboterarm (1, 2) angeordneten Brenner (4) ein Sensor (11) zum Erfassen der Naht angeordnet. Damit der Lasersensor (11) während der Nahterfassung nicht vom brennenden Lichtbogen gestört wird, ist zwischen der Wolframnadel (16) und dem Sensor (11) ein Schirm (13) in Form einer im Bereich des Sensors (11) schwenkbar angeordneten Klappe (13) vorgesehen.

## Beschreibung

Die Erfindung betrifft eine Vorrichtung zum Plasmalöten oder Plasmaschweißen mit einem an einem Roboter angeordneten Brenner.

Beim Plasmalöten oder Plasmaschweißen stellt sich das Problem, daß der Brenner die Naht sehr exakt verfolgen muß, d.h., daß er der Naht in dreidimensionaler Richtung folgen und auch der Abstand zwischen der Brennerspitze bzw. dessen Elektrode zur Schweißnaht bzw. den zu verschweißenden Teilen sehr exakt stimmen muß.

Der Erfindung liegt daher die Aufgabe zugrunde, eine gattungsgemäße Vorrichtung zur Verfügung zu stellen, die diese Problemstellung zufriedenstellend löst.

Gelöst wird diese Aufgabe mit einer Vorrichtung mit den Merkmalen des Anspruches 1.

Dem Plasmabrenner wird gemäß der Erfindung ein Sensor zugeordnet, der neben dem Brenner am Roboterarm befestigt und gemeinsam mit diesem bewegt wird, wobei die Lage der zu verbindenden Teile im Bereich der Naht vor dem Schweißen oder Löten erfaßt und anschließend der Brenner entlang der anhand der gegebenenfalls korrigierten Bewegungsbahn bewegt wird.

Beim Plasmalöten oder Plasmaschweißen stellt sich das besondere Problem, daß an der Brennerspitze permanent ein Lichtbogen brennt, auch wenn gerade nicht geschweißt oder gelötet wird. Durch diesen Lichtbogen wird der Lasersensor beim Erfassen der Naht gestört, was bislang ein Grund war, warum Plasmabrenner nicht gemeinsam mit Lasersensoren zum Erfassen der Naht eingesetzt werden konnten. Das Problem kann auch dadurch nicht behoben werden, daß der Lichtbogen des Brenners während des Erfassens der Naht abgeschaltet werden könnte, da das neuerliche Zünden des Lichtbogens durch die dabei auftretenden elektromagnetischen Felder den empfindlichen Lasersensor und die Schweißstromsteuerung stören würde.

Um dieses Problem zu beheben, wird in einer bevorzugten Ausführungsform der Erfindung ein während der Nahterfassung zwischen der Brennerspitze und dem Sensor angeordneter Schirm vorgeschlagen.

Dieser Schirm kann entweder permanent oder nur während des Erfassens der Naht durch den Lasersensor zwischen diesem und der Brennerspitze angeordnet sein. Bevorzugt ist allerdings, wenn der Schirm eine am Sensor schwenkbar angeordnete Klappe ist. Diese Klappe kann während des Erfassens der Naht zwischen der Brennerspitze und dem Sensor angeordnet sein und während des Lötens oder Schweißens derart umgeklappt sein, daß er unmittelbar vor dem Sensor angeordnet ist und diesen somit vor dem direkten Einfluß des Lichtbogens beim Schweißen oder Löten sowie vor Verschmutzung schützt.

Ein weiteres Problem, das sich bei der Anordnung eines Sensors neben dem Brenner stellt, ist jenes, daß die elektrischen Leitungen zum Sensor an Störkanten hängenbleiben oder an stark beanspruchten Stellen brechen.

Um dieses Problem zu lösen, wird in einer weiteren Ausführungsform der Erfindung vorgeschlagen, daß Leitungen zum Brenner inklusive Schutz und gegebenenfalls Plasmazuführung, zum Sensor und zu einer gegebenenfalls vorgesehenen Drahtzuführdüse durch eine in der Drehachse liegende Hohlwelle des Roboterarmabschnittes geführt sind, an dem der Brenner und der Sensor sowie gegebenenfalls die Gasdüse angeordnet sind.

Der letzte Roboterarmabschnitt, an dem der Brenner und der Sensor angeordnet sind, weist eine in Längsrichtung des Roboterarmabschnittes ausgerichtete Drehachse auf, um die der Brenner und der Sensor gedreht werden. In dieser Drehachse ist eine Hohlwelle vorgesehen, durch die einerseits die Leitungen zum Sensor, anderseits aber auch die Zuleitungen zum Brenner und zu einer gegebenenfalls vorgesehenen Drahtzuführdüse geführt sind. In dieser Hohlwelle sind die Leitungen einerseits gut geschützt und anderseits aber auf einfache Weise zugänglich.

Bei der Erfindung ist eine Steuereinheit vorgesehen, die aufgrund der, bei einer Meßfahrt entlang einer Naht vom Sensor aufgenommenen Meßdaten eine vorgegebene Bewegungsbahn des Brenners in dreidimensionaler Richtung korrigiert bzw. verschiebt und gleichzeitig die Schweiß- oder Lötparameter den aktuellen Bedingungen anpaßt, so daß nach dieser Meßfahrt eine sehr präzise Naht (hinsichtich Lage und geometrischer Qualität) hergestellt werden kann.

Nachfolgend wird eine bevorzugte Ausführungsform der Erfindung unter Bezugnahme auf die Zeichnungen beschrieben, in der
Fig. 1 den Endabschnitt eines Armes eines Industrieroboters in einer ersten Stellung und
Fig. 2 eine Fig. 1 entsprechende Darstellung zeigt, bei der der Brenner um 90° gedreht ist.

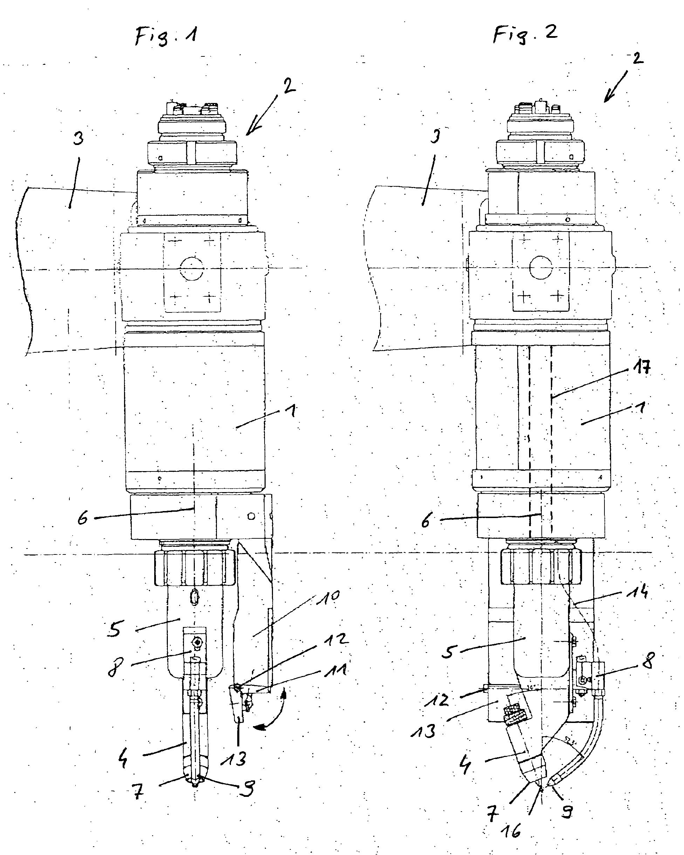

Die Fig. 1 und 2 zeigen den Endabschnitt 1 eines Roboterarmes 2 eines Industrieroboters, der gelenkig an einem zweiten Abschnitt 3 des Roboterarmes angeordnet ist. Der Abschnitt 3 seinerseits ist auf an sich bekannte Weise mit weiteren Abschnitten des Roboterarmes 2 des Industrieroboters verbunden. Am freien Ende des Abschnittes 1 ist ein Plasmabrenner 4 an einer Aufnahme 5 befestigt, die um eine Achse 6 drehbar am Abschnitt 1 gelagert ist. Der Brenner 4 weist eine Drahtzuführdüse 7 auf, deren Spitze 16 in der Drehachse 6 liegt. An der Aufnahme 5 ist des weiteren eine Halterung 8 für eine Gasdüse 9 befestigt, die im Bereich der Wolframnadel 16 mündet. Da die Halterung 8 an der Aufnahme 5 befestigt ist, wird sie beim Drehen des Brenners 7 mit diesem mitgedreht.

Neben der Aufnahme 5 ist am Abschnitt 1 des Roboterarmes 2 weiters ein Gehäuse 10 für einen Lasersensor 11 befestigt, das ebenfalls mit der Aufnahme 5 um die Drehachse 6 mitgedreht wird.

Das Gehäuse 10 kann - hier nach Art einer Klappe ausgeführt - durch einen um eine Achse 12 verschwenkbar gelagerten Deckel 13 verschlossen werden, so daß der Lasersensor geschützt im Gehäuse 10 aufgenommen ist. Wenn sich der Deckel 13 aber in der in den Fig. 1 und 2 dargestellten Stellung befindet, ist der Lasersensor 11 vom direkten Licht des an der Brennerspitze 7 brennenden Lichtbogens abgeschirmt und kann durch das Licht des Lichtbogens nicht gestört werden, während die Form bzw. der Verlauf der Naht erfaßt wird. Die Klappe 13 wird von einem mit der Steuerung des Roboters verbundenen Mechanismus angetrieben und automatisch geöffnet und geschlossen.

Um die Zuleitungen zum Lasersensor 11, zur Gasdüse 9 bzw. deren Halterung 8 und zum Brenner 4 vor äußeren Einflüssen zu schützen, ist im Abschnitt 1 eine mit Strichlinien angedeutete Hohlwelle 17 vorgesehen, die konzentrisch zur Drehachse 6 angeordnet ist. In dieser Hohlachse verlaufen sämtliche Leitungen (symbolisch ist in Fig. 2 eine Gasleitung 14 eingezeichnet), so daß diese nicht beschädigt oder an Störkanten hängen bleiben können. Es gibt am Abschnitt 1 somit keine bewegten Leitungen, so daß diese nicht durch Dauerbeanspruchung brechen können.

## Patentansprüche

1. Vorrichtung zum Plasmalöten oder Plasmaschweißen mit einem an einem Roboterarm (1, 2) angeordneten Brenner (4), dadurch gekennzeichnet, daß am Roboterarm (1) dem Brenner (4) ein Sensor (11) zum Erfassen der Schweißnaht zugeordnet ist.

2. Vorrichtung nach Anspruch 1, dadurch gekennzeichnet, daß der Sensor (11) ein Lasersensor ist.

3. Vorrichtung nach Anspruch 1 oder 2, gekennzeichnet durch einen während der Nahterfassung zwischen der Brennerspitze (7) und dem Sensor (11) angeordneten Schirm (13).

4. Vorrichtung nach Anspruch 3, dadurch gekennzeichnet, daß der Schirm (13) eine im Bereich des Sensors (11) schwenkbar angeordnete Klappe ist.

5. Vorrichtung nach einem der Ansprüche 1 bis 4,dadurch gekennzeichnet, daß Leitungen (14) zum Schutzgas-Brenner (4), zum Sensor (11) und zu einer gegebenenfalls vorgesehenen Gasdüse (9) durch eine in der Drehachse (6) liegende Hohlwelle des Roboterarmabschnittes (1) geführt sind, an dem der Brenner (4) und der Sensor (11) sowie gegebenenfalls die Drahtzuführdüse (9) angeordnet sind.

6. Vorrichtung nach einem der Ansprüche 1 bis 5, dadurch gekennzeichnet, daß eine Steuereinheit vorgesehen ist, die aufgrund der vom Sensor (11) gelieferten Meßdaten nach Filterung bzw. Korrektur von durch Störeinflüsse verursachten Meßfehlern bei Bedarf den programmierten Bewegungsverlauf des Brenners (4) verschiebt und die Schweiß- bzw. Lötparameter den aktuellen Bedingungen anpaßt.
